# EUROPEAN PATENT SPECIFICATION

(11) **EP 3 027 684 B1**
(45) Date of publication and mention of the grant of the patent: **17.05.2017**
(21) Application number: 14747550.3
(22) Date of filing: 24.07.2014
(51) Int. Cl.: C08L 27/12, C08L 27/16, C08L 23/08, C08L 27/18

(54) **FLUORINE-CONTAINING THERMOPLASTIC ELASTOMER COMPOSITION**
THERMOPLASTISCHE FLUOROKAUTSCHUKZUSAMMENSTEZUNG
COMPOSITION THERMOPLASTIQUE DE CAOUTCHOUC FLUORÉ

(30) Priority: 30.07.2013 US 201361859913 P
(43) Date of publication of application: 08.06.2016
(73) Proprietor: Solvay Specialty Polymers Italy S.p.A., 20021 Bollate (MI) (IT)
(72) Inventor: BANDI, Suneel, Voorhees, New Jersey 08013 (US); LI, Kun, Media, Pennsylvania 19063 (US); SCHILD, Philip, West Chester, Pennsylvania 19382 (US); FIGUEROA, Edwin, Wilmington, Delaware 19850 (US); KENT, Bradley, Lane, Woolwich Township, New Jersey 08085 (US)
(74) Representative: Benvenuti, Federica
(86) International application number: PCT/EP2014/065879
(87) International publication number: WO 2015/014698

(56) References cited:
- WO-A1-01/12685
- US-A1- 2008 157 439

## Description

### Technical Field

The present invention relates to a fluorine-containing thermoplastic elastomer composition, comprising a continuous thermoplastic fluorocarbon polymer phase and a dispersed vulcanized fluorine-containing elastomer phase, which is useful as melt-formable material having rubber elasticity.

### Background Art

Two-phase compositions comprising a continuous phase thermoplastic material and a disperse phase elastomer, produced by dynamically vulcanizing the elastomer while the dispersed phase elastomer is mixed under shear in the continuous thermoplastic material kept in the molten state are well known in the art and often referred to as thermoplastic vulcanizates (TPV).

These materials are particularly advantageous in that they derive their rubber-like properties from the dispersed phase, so that they can be notably used in all rubber-typical fields of use (sealing articles, including seals and gaskets, pipes, hoses, flat sheets, and the like), while being processable as thermoplasts, including possibility of reforming scraps, flashes or defective parts.

Because of advantageous properties of fluorine-containing materials, TPV including both thermoplastic fluorinated polymer continuous phase, and more specifically an ethylene-chlorotrifluoroethylene or ethylene-tetrafluoroethylene phase, and fluorine-containing elastomer dispersed phase have attracted great deal of attention for providing outstanding thermal resistance, chemical resistance, and the like.

For instance, patent document EP 168020 A (DUPONT DE NEMOURS) 15.01.1986 discloses fluorinated thermoplastic elastomer containing two phases, namely a crystalline thermoplastic phase and a dispersed fluorinated amorphous elastomeric phase, obtained by blending the components in the molten state and then dynamically curing the same, e.g. in an extruder through addition of a curing agent (ionic curing or peroxide curing). Thermoplastic polymer can be notably ECTFE; example 9 pertains to the preparation in a Braebender of a TPV comprising 70 % wt vinylidene fluoride (VDF)/hexafluoropropylene (HFP) copolymer and 30 % wt of ECTFE copolymer (CTFE/E 80/20 wt/wt) by ionic curing.

Still, patent document US 5006594 (DUPONT DE NEMOURS) 09.04.1991 discloses new blends of fluorinated thermoplastic elastomers containing a two-phase composition including a continuous phase of a melt processable resin and a dispersed phase of an amorphous crosslinked fluoroelastomer. ETFE and ECTFE are mentioned as possible thermoplastic fluororesin.

It is nevertheless well known that for a TPV material to deliver its performances, it is essential to ensure adequate crosslinking of the dispersed elastomer phase during dynamic vulcanization. Several technologies have been developed for optimizing dynamic vulcanization of the elastomer phase.

Thus, patent document US 5354811 (ASAHI GLASS COMPANY LTD) 11.10.1994 is directed to certain fluorine-containing thermoplastic elastomer compositions comprising a continuous phase of at least one melt-formable thermoplastic fluorocarbon resin and a disperse phase of vulcanizate of fluorine-containing elastomer. The thermoplast can be notably ECTFE or ETFE. For improving vulcanization efficiency, the fluorine-containing elastomer has specific vulcanizable sites, selected from the group consisting of epoxy groups, carboxylic groups, sulfonic groups, and derivatives thereof.

Increasing amounts of curative is another solution, which might lead to additional drawbacks, including e.g. the need of eliminating unreacted curatives. Patent document US 2005/0281973 (FREUDENBERG-NOK) 22.12.2005 is directed to a method for manufacturing processable rubber compositions containing dynamic vulcanizates of fluorocarbon elastomer in a continuous phase of a thermoplastic material, including a step of heat treatment for decomposing and driving off un-reacted polyol curatives, before further processing of the TPV by thermoplastic techniques to form shaped articles. As thermoplast, ECTFE and ETFE can be used.

There is thus a continuous need in the art for TPV compositions wherein the elastomer dispersed phase is effectively cured, with high crosslinking kinetics and good efficiency, so as to deliver rubber properties in the final compound.

### Summary of invention

The Applicant has now found that the incorporation in the TPV composition of certain polymer having ionisable groups is particularly effective in ensuring optimized dynamic crosslinking of the elastomer phase.

It is thus hereby provided a thermoplastic vulcanizate fluorine-containing composition [vulcanizate (C)], comprising a continuous thermoplastic fluoropolymer phase and a dispersed vulcanized fluoroelastomer phase, said composition comprising:
- at least one thermoplastic fluoropolymer [polymer (F)];
- at least one (per)fluoroelastomer [elastomer (A)], and
- at least one ionomer polymer comprising recurring units derived from a fluorine-free hydrogenated olefin and recurring units derived from a (meth)acrylic acid having carboxylic acid group, at least a fraction of carboxylic acid groups being under the form of metal or ammonium salts. [ionomer (I)].

The Applicant has surprisingly found that the incorporation in the vulcanizate (C), as above detailed, of the ionomer (I) is particularly beneficial for improving kinetics of dynamic vulcanization of the fluoroelastomer within the thermoplastic fluoropolymer matrix, so as to ensure optimum rubber-like performances of the resulting TPV compound.

The invention further pertains to a precursor mixture [mixture (M)] of a thermoplastic vulcanizate fluorine-containing composition, said composition comprising:
- at least one thermoplastic fluoropolymer [polymer (F)];
- at least one (per)fluoroelastomer [elastomer (A)],
- at least one ionomer polymer comprising recurring units derived from a fluorine-free hydrogenated olefin and recurring units derived from a (meth)acrylic acid having carboxylic acid group, at least a fraction of carboxylic acid groups being under the form of metal or ammonium salts. [ionomer (I)]; and
- at least one curing system for the elastomer (A).

The invention further pertains to a method for manufacturing the vulcanizate (C), as above detailed, comprising dynamic curing of the precursor mixture, as above detailed.

### Description of embodiments

Polymer (F) is a thermoplast, that is to say a polymer which softens on heating and hardens on cooling at room temperature, which at room temperature exists below its glass transition temperature if amorphous or below its melting point if semi-crystalline.

It is nevertheless generally preferred for the polymer (F) to be semi-crystalline, that is to say to have a definite melting point; preferred polymers (F) are those possessing a heat of fusion of at least 5 J/g, preferably of at least 10 J/g, more preferably at least 30 J/g. Without upper limit for heat of fusion being critical, it is nevertheless understood that polymer (A) will generally possess a heat of fusion of at most 55 J/g, preferably of at most 53 J/g, more preferably of at most 50 J/g.

Heat of fusion is generally determined by DSC according to ASTM D1638 standard.

Polymer (F) is fluorinated, that is to say it comprises recurring units derived from at least one fluorinated monomer [monomer (F)].

The monomer (F) is generally selected from the group consisting of:
(a) C₂-C₈ perfluoroolefins, such as tetrafluoroethylene, and hexafluoropropene;
(b) C₂-C₈ hydrogenated fluoroolefins, such as vinyl fluoride, 1,2-difluoroethylene, vinylidene fluoride and trifluoroethylene;
(c) perfluoroalkylethylenes complying with formula CH₂=CH-R_{f0}, in which R_{f0} is a C₁-C₆ perfluoroalkyl;
(d) chloro- and/or bromo- and/or iodo-C₂-C₆ fluoroolefins, like chlorotrifluoroethylene;
(e) (per)fluoroalkylvinylethers complying with formula CF₂=CFOR_{f1} in which R_{f1} is a C₁-C₆ fluoro- or perfluoroalkyl, e.g. CF₃, C₂F₅, C₃F₇ ;
(f) CF₂=CFOX₀ (per)fluoro-oxyalkylvinylethers, in which X₀ is a C₁-C₁₂ alkyl, or a C₁-C₁₂ oxyalkyl, or a C₁-C₁₂ (per)fluorooxyalkyl having one or more ether groups, like perfluoro-2-propoxy-propyl;
(g) (per)fluoroalkylvinylethers complying with formula CF₂=CFOCF₂OR_{f2} in which R_{f2} is a C₁-C₆ fluoro- or perfluoroalkyl, e.g. CF₃, C₂F₅, C₃F₇ or a C₁-C₆ (per)fluorooxyalkyl having one or more ether groups, like -C₂F₅ -O-CF₃;
(h) functional (per)fluoro-oxyalkylvinylethers complying with formula CF₂ =CFOY₀, in which Yo is a C₁-C₁₂ alkyl or (per)fluoroalkyl, or a C₁-C₁₂ oxyalkyl, or a C₁-C₁₂ (per)fluorooxyalkyl having one or more ether groups and Yo comprising a carboxylic or sulfonic acid group, in its acid, acid halide or salt form;
(i) fluorodioxoles, of formula (I): 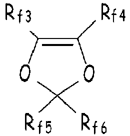
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

The polymer (F) might comprise recurring units derived from one or from more than one monomers (F), as above detailed. Further, in addition, polymer (F) may comprise recurring units derived from one or more fluorine-free monomers.

Polymer (F) used in the TPV composition of this invention typically comprises:
(j) from 40 to 60% by moles of recurring units derived from ethylene (E);
(jj) from 60 to 40% by moles of recurring units derived from at least one of chlorotrifluoroethylene (CTFE) and tetrafluoroethylene (TFE); and
(jjj) from 0 to 10% by moles, preferably from 0 to 5%, more preferably from 0 to 2.5 % by moles, of recurring units derived from of at least one fluorinated and/or fluorine-free comonomer(s) different from E, CTFE and TFE.

The comonomer (jjj) can be a fluorine-free comonomer selected from the group consisting of:
1) acrylic monomers having general formula: CH₂=CH-CO-O-R₂ wherein R₂ is a C₁-C₂₀ hydrocarbon group, optionally containing one or more heteroatoms;
2) vinylether monomers having general formula: CH₂=CH-O-R₂ wherein R ₂ is a C₁-C₂₀ hydrocarbon group, optionally containing one or more heteroatoms;
3) vinyl esters of the carboxylic acid having general formula: CH₂ =CH-O-CO-R₂ wherein R₂ is a C₁-C₂₀ hydrocarbon group, optionally containing one or more heteroatoms;
4) unsaturated carboxylic acids having general formula CH₂=CH-(CH₂)ₙ -COOH wherein n is 0 or an integer of 1 to 10.

The comonomer (jjj) can be a fluorinated comonomer; in such case, comonomer (jjj), provided is different from monomer (jj) (i.e. from CTFE or from TFE) can be any of monomers listed above under (a) to (i), and more particularly can be a monomer of type (e), as above detailed.

Among polymers (F), ECTFE copolymers, i.e. copolymers wherein monomer (jj) is CTFE, i.e. in other words, copolymers of ethylene and CTFE (and optionally a third monomer, as above detailed) are preferred.

ECTFE polymers suitable in the composition of the invention typically possess a melting temperature exceeding 220°C, preferably exceeding 225°C, even exceeding 230°C, preferably exceeding 235°C. The melting temperature is determined by Differential Scanning Calorimetry (DSC) at a heating rate of 10°C/min, according to ASTM D 3418.

ECTFE polymers which have been found to give particularly good results in the composition of the invention are those consisting essentially of recurring units derived from:
(j) from 46 to 52% by moles of ethylene (E);
(jj) from 54 to 48% by moles of chlorotrifluoroethylene (CTFE), based on the sum of (j) and (jj), and, optionally
(jjj) from 0.01 to 5 % by moles, based on the sum of (j), (jj) and (jjj), of at least one (per)fluoroalkylvinylethers complying with formula CF₂=CFOR_{f1} in which R_{f1} is a C₁-C₆ fluoro- or perfluoroalkyl, e.g. CF₃, C₂F₅, C₃F₇.

End chains, defects or minor amounts of monomer impurities leading to recurring units different from those above mentioned can be still comprised in the preferred ECTFE, without these affecting properties of the material.

The melt flow rate of the ECTFE polymer, measured following the procedure of ASTM 3275-81 at 230°C and 2.16 Kg, ranges generally from 0.01 to 75 g/10 min, preferably from 0.1 to 50 g/10 min, more preferably from 0.5 to 30 g/10 min.

For the purposes of this invention, the term "(per)fluoroelastomer" [elastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer).

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Non limitative examples of suitable (per)fluorinated monomers are notably:
- C₂-C₈ fluoro- and/or perfluoroolefins, such as tetrafluoroethylene (TFE), hexafluoropropene (HFP), pentafluoropropylene, and hexafluoroisobutylene;
- C₂-C₈ hydrogenated monofluoroolefins, such as vinyl fluoride;
- (per)fluoroalkylethylenes complying with formula CH₂=CH-R_{f0}, in which R _{f0} is a C₁-C₆ (per)fluoroalkyl or a C₁-C₆ (per)fluorooxyalkyl having one or more ether groups ;

- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇ ;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇ ;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂OR _{f2} in which R_{f2} is a C₁-C₆ fluoro- or perfluoroalkyl, e.g. -CF₃, -C₂F₅, -C₃F₇ or a C₁-C₆ (per)fluorooxyalkyl having one or more ether groups, like -C₂F₅ -O-CF₃;
- functional fluoro-alkylvinylethers complying with formula CF₂=CFOY₀, in which Yo is a C₁-C₁₂ alkyl or (per)fluoroalkyl, or a C₁-C₁₂ oxyalkyl or a C₁
- C₁₂ (per)fluorooxyalkyl, said Yo group comprising a carboxylic or sulfonic acid group, in its acid, acid halide or salt form;
- fluorodioxoles, of formula : 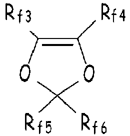
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

Examples of hydrogenated monomers are notably hydrogenated alpha-olefins, including ethylene, propylene, 1-butene, diene monomers, styrene monomers, alpha-olefins being typically used.

(Per)fluoroelastomers (A) are in general amorphous products or products having a low degree of crystallinity (crystalline phase less than 20 % by volume) and a glass transition temperature (Tg) below room temperature. In most cases, the (per)fluoroelastomer has advantageously a T_{g} below 10°C, preferably below 5°C, more preferably 0°C.

The (per)fluoroelastomer (A) is preferably selected among:
(1) VDF-based copolymers, in which VDF is copolymerized with at least one comonomer selected from the group consisting of the followings classes, with the provision that such comonomer is different from VDF:
   (a1) C₂-C₈ perfluoroolefins, such as tetrafluoroethylene (TFE), hexafluoropropylene (HFP), hexafluoroisobutylene;
   (b1) hydrogen-containing C₂-C₈ olefins, such as C₂-C₈ non-fluorinated olefins (OI); C₂-C₈ partially fluorinated olefins, vinyl fluoride (VF), trifluoroethylene (TrFE), perfluoroalkyl ethylenes of formula CH₂ = CH-R_{f}, wherein R_{f} is a C₁-C₆ perfluoroalkyl group;
   (c1) C₂-C₈ chloro and/or bromo and/or iodo-fluoroolefins such as chlorotrifluoroethylene (CTFE);
   (d1) (per)fluoroalkylvinylethers of formula CF₂ = CFOR_{f}, wherein R_{f} is a C₁ -C₆ (per)fluoroalkyl group; preferably perfluoroalkylvinylethers (PAVE) of above formula wherein R_{f} is C₁-C₆ perfluoroalkyl group, e.g. CF₃, C₂F₅, C₃F₇;
   (e1) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
   (f1) (per)fluorodioxoles having formula : 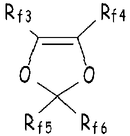 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
   (g1) (per)fluoro-methoxy-vinylethers (MOVE, hereinafter) having formula:

      CFX² = CX²OCF₂OR"_{f}

      wherein R"_{f} is selected among C₁-C₆ (per)fluoroalkyls, linear or branched; C₅-C₆ cyclic (per)fluoroalkyls; and C₂-C₆ (per)fluorooxyalkyls, linear or branched, comprising from 1 to 3 catenary oxygen atoms, and X² = F, H; preferably X² is F and R"_{f} is -CF₂CF₃ (MOVE1); -CF₂CF₂OCF₃ (MOVE2); or -CF₃ (MOVE3);
   (h1) C₂-C₈ non-fluorinated olefins (OI), for example ethylene and propylene; and
(2) TFE-based copolymers, in which TFE is copolymerized with at least one comonomer selected from the group consisting of the classes (a1), (c1), (d1), (e1), (g1), (h1), and class (i2) below, with the provision that such comonomer is different from TFE:
   (i2) perfluorovinyl ethers containing cyanide groups, such as notably those described in patents US 4 281 092, US 5 447 993 and US 5 789 489.

Most preferred (per)fluoroelastomers (A) are those having following compositions (in mol %) :
(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %;
(ii) vinylidene fluoride (VDF) 50-80 %, perfluoroalkyl vinyl ethers (PAVE) 5-50 %, tetrafluoroethylene (TFE) 0-20 %;
(iii) vinylidene fluoride (VDF) 20-30 %, C₂-C₈ non-fluorinated olefins (OI) 10-30 %, hexafluoropropene (HFP) and/or perfluoroalkyl vinyl ethers (PAVE) 18-27 %, tetrafluoroethylene (TFE) 10-30 %;
(iv) tetrafluoroethylene (TFE) 50-80 %, perfluoroalkyl vinyl ethers (PAVE) 20-50 %;
(v) tetrafluoroethylene (TFE) 45-65 %, C₂-C₈ non-fluorinated olefins (OI) 20-55 %, vinylidene fluoride 0-30 %;
(vi) tetrafluoroethylene (TFE) 32-60 % mol %, C₂-C₈ non-fluorinated olefins (OI) 10-40 %, perfluoroalkyl vinyl ethers (PAVE) 20-40 %, fluorovinyl ethers (MOVE) 0-30 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %;
(ix) tetrafluoroethylene (TFE) 20-70 %, fluorovinyl ethers (MOVE) 30-80 %, perfluoroalkyl vinyl ethers (PAVE) 0-50 %.

Optionally, (per)fluoroelastomer (A) of the present invention also comprises recurring units derived from a bis-olefin [bis-olefin (OF)] having general formula : 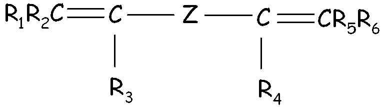 wherein R₁, R₂, R₃, R₄, R₅ and R₆, equal to or different from each other, are H, halogen, a group R_{Alk} or OR_{Alk}, wherein R_{Alk} is a branched or straight chain alkyl radical which can be partially, substantially or completely fluorinated or chlorinated; Z is a linear or branched C₁-C₁₈ alkylene or cycloalkylene radical, optionally containing oxygen atoms, preferably at least partially fluorinated, or a (per)fluoropolyoxyalkylene radical, e.g. as described in EP 661304 A (AUSIMONT SPA) 05.07.1995.

The bis-olefin (OF) is preferably selected from the group consisting of those complying with formulae (OF-1), (OF-2) and (OF-3):
(OF-1) 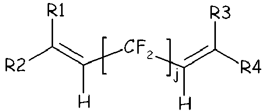 wherein j is an integer between 2 and 10, preferably between 4 and 8, and R1, R2, R3, R4, equal or different from each other, are H, F or C₁₋₅ alkyl or (per)fluoroalkyl group;
(OF-2) 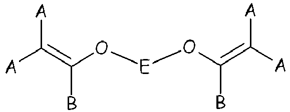 wherein each of A, equal or different from each other and at each occurrence, is independently selected from F, Cl, and H; each of B, equal or different from each other and at each occurrence, is independently selected from F, Cl, H and OR_{B}, wherein R_{B} is a branched or straight chain alkyl radical which can be partially, substantially or completely fluorinated or chlorinated; E is a divalent group having 2 to 10 carbon atom, optionally fluorinated, which may be inserted with ether linkages; preferably E is a -(CF₂)ₘ- group, with m being an integer from 3 to 5; a preferred bis-olefin of (OF-2) type is F₂C=CF-O-(CF₂)₅-O-CF=CF₂.
(OF-3) 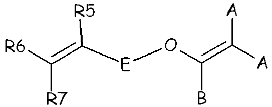 wherein E, A and B have the same meaning as above defined; R5, R6, R7, equal or different from each other, are H, F or C₁₋₅ alkyl or (per)fluoroalkyl group.

The weight ratio between polymer (F) and elastomer (A) is not particularly critical, provided that it is selected by routine experiments so as to deliver a continuous thermoplastic fluoropolymer phase and a dispersed vulcanized fluoroelastomer phase in the vulcanizate (C). Generally the weight ratio polymer (F)/elastomer (A) will be comprised between 10/90 wt/wt to 50/50 wt/wt, preferably 20/80 to 40/60 wt/wt. The skilled in the art will select most appropriate weight ratio in view of target final properties of the vulcanizate (C).

The vulcanizate (C) of the invention comprises at least one ionomer (I).

lonomer (I) generally complies with formula: 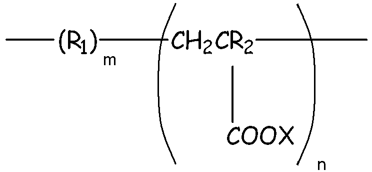 wherein:
- each of R₁ is independently a divalent alkyl group having from 2 to 4 carbon atoms (preferably R₁ is -CH₂CH₂-);
- each of R₂ is independently H or a C₁-C₃ alkyl group, preferably R₂ is H or -CH₃;
- m and n are integers, such as the ratio n/(m+n) is of 1 to 50 % moles,
- each of X is independently selected from the group consisting of H;
ammonium groups of formula NR^{N}₄ wherein each of R^{N}₄, equal to or different from each other, is H or a C₁-C₁₂ hydrocarbon group, preferably a C₁-C₆ alkyl group; and metals; said metals being advantageously selected from the group consisting of alkaline metals, alkaline earth metals, and Zn, with the provision that at least 10 % of the occurrences of X in above formula are selected from the group consisting of ammonium groups and metals, as above detailed.

In preferred embodiments, the ionomer (I) is an ethylene-acrylic acid copolymer comprising from 2.5 to 25 % moles of recurring units derived from acrylic acid, the remained being recurring units derived from ethylene, said copolymer being at least partially salified with a metal selected from the group consisting of Na, Mg, Ca, Zn.

Ethylene-acrylic acid copolymers as above detailed can be notably obtained in the market place under trade name Aclyn® from Honeywell, as Surlyn® from DuPont de Nemours, as lotek® from ExxonMobil, and as Primacor® from Dow Chemical Corporation.

The ionomer (I) is present in the vulcanizate (C) of the invention in an amount of 0.5 to 20 % wt, preferably of 1 to 15 % wt, more preferably of 3 to 10 % wt, based on the weight of polymer (F).

Still, the vulcanizate (C) may comprise additional optional ingredients, such as plasticizers, extender oils, synthetic processing oils, stabilizers, processing aids, fillers, pigments, adhesives, tackifiers, and waxes. Such additional ingredients might be blended into the precursor mixture (M), or can be later compounded into the vulcanizate (C) after dynamic curing.

The invention further pertains to a precursor mixture [mixture (M)] of a thermoplastic vulcanizate fluorine-containing composition, said mixture (M) comprising:
- at least one thermoplastic fluoropolymer [polymer (F)], as above detailed;
- at least one (per)fluoroelastomer [elastomer (A)], as above detailed,
- at least one ionomer polymer comprising recurring units derived from a fluorine-free hydrogenated olefin and recurring units derived from a (meth)acrylic acid having carboxylic acid group, at least a fraction of carboxylic acid groups being under the form of metal or ammonium salts. [ionomer (I)], as above detailed; and
- at least one curing system for the elastomer (A).

All the features described above for components polymer (F), elastomer (A) and ionomer (I), and for optional ingredients of the vulcanizate (C) are also applicable here as preferred embodiments of the mixture (M).

As mentioned, for obtaining the vulcanizate (C) of the present invention, the precursor mixture [mixture (M)] to be submitted to dynamic curing for obtaining the vulcanizate (C) further comprises at least one curing system for the elastomer (A).

It is thus understood that the vulcanizate (C) may thus additional comprise residues or decompositions products derived from said curing system, without this deviating from above detailed description.

The curing system can be effective for ionic curing, peroxide curing and/or mixed curing of the elastomer (A).

The amount of the curing system is not particularly limited, provided that is present in an amount effective to ensure crosslinking of the elastomer (A) within the vulcanizate (C).

A curing system for peroxide curing generally comprises at least one peroxide (generally, an organic peroxide) that is capable of generating radicals by thermal decomposition, in an amount generally of between 0.1 and 10 and preferably between 0.5 and 5 weight parts per hundred parts of the elastomer (A). Among most commonly used agents, mention can be made of: dialkyl peroxides, for instance di-tert-butyl peroxide and 2,5-dimethyl-2,5-bis(tert-butylperoxy)hexane; dicumyl peroxide; dibenzoyl peroxide; di-tert-butyl perbenzoate; bis[1,3-dimethyl-3-(tert-butylperoxy)butyl] carbonate.

Further, in addition, the curing system for peroxide curing comprises:
(a) at least one curing coagent, in an amount generally of between in an amount generally of between 0.5 and 10 and preferably between 1 and 7 weight parts per hundred parts of the elastomer (A); among these coagents, the following are commonly used : triallyl cyanurate; triallyl isocyanurate (TAIC); tris(diallylamine)-s-triazine; triallyl phosphite; N,N-diallylacrylamide; N,N,N',N'-tetraallylmalonamide; trivinyl isocyanurate; 2,4,6-trivinyl methyltrisiloxane; bis-olefins (OF), as above detailed; triazines, such as notably those described in European patent applications EP 860436 A (AUSIMONT SPA) 26.08.1998 and WO 97/05122 (DUPONT DE NEMOURS) 13.02.1997 ; among above mentioned curing coagents, bis-olefins (OF), as above detailed, and more specifically those of formula (OF-1), as above detailed, have been found to provide particularly good results;
(b) optionally, a metallic compound, in an amounts of advantageously 1 to 15 and preferably 2 to 10 weight parts per hundred parts of the elastomer (A), selected from the group consisting of oxides and hydroxides of divalent metals, for instance Mg, Zn, Ca or Pb, optionally combined with a salt of a weak acid, for instance Ba, Na, K, Pb, Ca stearates, benzoates, carbonates, oxalates or phosphites; (c) optionally, acid acceptors of the metal non-oxide type, such as 1,8-bis(dimethylamino)naphthalene, octadecylamine, etc.

When the vulcanizate (C) is obtained by peroxide curing, elastomer (A) preferably contains iodine and/or bromine atoms in the chain and/or at the end of the macromolecules. The introduction of these iodine and/or bromine atoms may be obtained:
- by addition during elastomer (A) manufacture to the polymerization medium of brominated and/or iodinated cure-site comonomers, such as bromo and/or iodo olefins containing from 2 to 10 carbon atoms, or iodo and/or bromo fluoroalkyl vinyl ethers, in amounts such that the content of cure-site comonomers in the elastomer (A) is generally between 0.05 and 2 mol per 100 mol of the other base monomer units; or
- via addition during elastomer (A) manufacture of iodinated and/or brominated chain-transfer agent(s) to the polymerization medium, for instance compounds of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2 or alkali metal or alkaline-earth metal iodides and/or bromides.

A curing system for ionic curing generally comprises at least one curing agent and at least one accelerator, as well known in the art.

The amount of accelerator(s) is generally comprised between 0.05 and 5 weight parts per hundred parts of elastomer (A) (phr) and that of the curing agent typically between 0.5 and 15 phr and preferably between 1 and 6 phr.

Aromatic or aliphatic polyhydroxylated compounds, or derivatives thereof, may be used as curing agents. Among these, mention will be made in particular of dihydroxy, trihydroxy and tetrahydroxy benzenes, naphthalenes or anthracenes; bisphenols, in which the two aromatic rings are linked together via an aliphatic, cycloaliphatic or aromatic divalent radical, or alternatively via an oxygen or sulphur atom, or else a carbonyl group. The aromatic rings may be substituted with one or more chlorine, fluorine or bromine atoms, or with carbonyl, alkyl or acyl groups. Bisphenol AF is particularly preferred.

Examples of accelerators that may be used include: quaternary ammonium or phosphonium salts; aminophosphonium salts; phosphoranes; the imine compounds; etc. Quaternary phosphonium salts and aminophosphonium salts are preferred.

Instead of using the accelerator and the curing agent separately, it is also possible for the curing system for ionic curing to comprise an adduct between an accelerator and a curing agent in a mole ratio of from 1:2 to 1:5 and preferably from 1:3 to 1:5, the accelerator being one of the organic onium compounds having a positive charge, as defined above, and the curing agent being chosen from the compounds indicated above, in particular dihydroxy or polyhydroxy or dithiol or polythiol compounds; the adduct being obtained by melting the product of reaction between the accelerator and the curing agent in the indicated mole ratios, or by melting the mixture of the 1:1 adduct supplemented with the curing agent in the indicated amounts. Optionally, an excess of the accelerator, relative to that contained in the adduct, may also be present.

The following are particularly preferred as cations for the preparation of the adduct: 1,1-diphenyl-1-benzyl-N-diethylphosphoranamine and tetrabutylphosphonium; particularly preferred anions are bisphenol compounds in which the two aromatic rings are bonded via a divalent radical chosen from perfluoroalkyl groups of 3 to 7 carbon atoms, and the OH groups are in the para position.

Other ingredients optionally comprised in the curing system for ionic curing are :
i) one or more mineral acid acceptors, generally chosen from those known in the ionic curing of elastomers, preferably selected from the group consisting of oxides of divalent metals, preferably oxides of Mg, Zn, Ca or Pb, typically comprised in amounts of 1-40 phr of elastomer (A);
ii) one or more basic compounds chosen from those known in the ionic curing of elastomers, commonly selected from the group consisting of hydroxides of divalent metals (preferably: Ca(OH)₂, Sr(OH)₂, Ba(OH)₂), metal salts of weak acids, for instance Ca, Sr, Ba, Na and K carbonates, benzoates, oxalates and phosphites and mixtures of the above mentioned hydroxides with the above mentioned metal salts, typically added in amounts of from 0.5 to 10 phr of elastomer (A).

The invention further pertains to a method for manufacturing the vulcanizate (C), as above detailed, comprising dynamic curing of the mixture (M), as above detailed.

The method generally comprises heating the mixture (M) in an extruder or a mixer at a temperature above the crystalline melting point of the polymer (F), if polymer (F) is semi-crystalline, or above its glass transition temperature if polymer (F) is amorphous and vulcanizing the elastomer (A) while exerting a mixing shearing force.

The temperature is usually at least 200°C, preferably at least 250°C.

Preferred devices for carrying out the method of the invention are extruders. In such embodiments, ingredients of the mixture (M) can be pre-mixed all together and e.g. fed to the extruder through a single hopper, or can be fed to the extruder through separated feeders. It is generally preferred to add the above described curing system for the elastomer (A) through a separate feeder, which will deliver said curing system in the molten mass of elastomer (A) and fluoropolymer (F).

The vulcanizates (C) of the invention can be used as sealing material, e.g. in the chemical and semiconductor industries, and are suitable for fabricating O-rings, V-rings, gaskets and diaphragms.

In the electrical and wire/cable industries, vulcanizates (C) can be used for wire coating and wire/cable sheathing due to their flexibility, low flammability and oil, fuel and chemical resistance.

The invention will be now described with reference to the following examples, whose purpose is merely illustrative and not intended to limit scope of the invention.

### EXAMPLES

### RAW MATERIALS

TECNOFLON^{®} MN FKM is a vinylidene fluoride/hexafluoropropylene elastomer having a fluorine content of 66 % wt, available under the form of a micronized powder with average particle size of about 500 µm (elastomer (A1), herein after).

TECNOFLON^{®} FOR M1 is a masterbatch made of appr. 50.0 % wt of an elastomeric VDF/HFP copolymer and appr. 50.0 % wt of 4,4'-[2,2,2-trifluoro-1-(trifluoromethyl)ethylidene]bisphenol (FOR M1, herein after)

TECNOFLON^{®} FOR M2 is a masterbatch made of appr. 70.0 % wt of an elastomeric VDF/HFP copolymer and appr. 30.0 % wt of Benzyl (diethylamino) diphenyl phosphonium chloride (FOR M2, herein after)

ACLYN^{®} 201 ionomer is an ethylene-acrylic acid ionomer, having an acid number of 42 mg KOH/g, commercially available from Honeywell (ionomer (11), herein after).

HALAR^{®} ECTFE XPH 800, which is an E/CTFE copolymer comprising about 1.5 % wt of recurring units derived from perfluoropropylvinylether, commercially available from Solvay Specialty Polymers (ECTFE (F1), hereinafter).

FPA-1 is FLUOROLINK^{®} A10 perfluoropolyether macromer, having end chains of formula -CONH-C₁₈H₃₇, with M_{w} ∼ 1800, 40 % fluorine content and melting point of about 40°C.

### Effect of lonomer (I) on curing behaviour of elastomer (A)

Mixtures of elastomer (A1) and curing reagents were combined with ionomer (11) for testing impact of the ionomer (11) on cure behaviour.

Cure behaviour was characterized by Moving Die Rheometer (MDR) and Oscillating Disk Rheometer (ODR), at a temperature of 200°C, by determining the following properties:

### MDR:

S'_{Min} = Minimum elastic torque S'
S'_{Max} = Maximum elastic torque S'
t_{S2} = Scorch time, time for two units rise from M_{L}(s);
t'₁₀ Time to 10% state of cure(s);
t'₅₀ Time to 50% state of cure(s);
t'₉₀ = Time to 90% state of cure(s);

### ODR:

M_{L} = Minimum torque (Ib x in)
M_{H} = Maximum torque (Ib x in) , whereby 1 lb x in = 0.113 N.m
t_{S2} = Scorch time, time for two units rise from M_{L} (s);
t'₁₀ = Time to 10% state of cure(s);
t'₅₀ Time to 50% state of cure(s);
t'₉₀ = Time to 90% state of cure(s).

Results are summarized in the following table, from which clearly results that ionomer (11) has an advantageous effect on curing the elastomer (11).

**Table 1**

| Example | | **1C** | **2** | **3** |
|---|---|---|---|---|
| Elastomer (A1) | | 100 | 100 | 100 |
| FOR M1 | | 4 | 4 | 4 |
| FOR M2 | | 1.5 | 1.5 | 1.5 |
| Ca(OH)₂ | | 3 | 3 | 3 |
| Ionomer (I1) | | 0 | 5 | 10 |

| Rheology properties -- MDR (after 6 minutes at 200°C) | | | | |
|---|---|---|---|---|
| S' Min | Ib x in | 0.52 | 0.43 | 0.37 |
| S' Max | Ib x in | 7.19 | 5.76 | 4.65 |
| tₛ₂^{MDR} | sec | 2.03 | 1.15 | 1.14 |
| t₁₀^{MDR} | sec | 1.37 | 0.57 | 0.52 |
| t₅₀^{MDR} | sec | 2.28 | 1.21 | 1.16 |
| t₉₀^{MDR} | sec | 4.32 | 1.58 | 1.5 |

| Rheology properties -- ODR at 200°C | | | | |
|---|---|---|---|---|
| M_{L} | Ib x in | 6.48 | 5.55 | 5.22 |
| M_{H} | Ib x in | 61.72 | 35.68 | 34.69 |
| tₛ₂^{ODR} | sec | 2.5 | 1.62 | 1.54 |
| t₁₀^{ODR} | sec | 2.85 | 1.73 | 1.66 |
| t₅₀^{ODR} | sec | 3.6 | 2.27 | 2.32 |
| t₉₀^{ODR} | sec | 5.83 | 2.78 | 2.97 |

### MANUFACTURE OF TPV COMPOSITIONS

Thermoplastic vulcanizates were produced in an extruder by dynamic vulcanization, adopting the following temperature profile:

**Table 2**

| Zone | 1 | 2 | 3 | 4 | Flange 1 | Flange 2 |
|---|---|---|---|---|---|---|
| T (°C) | 172 | 200 | 22 1 | 240 | 238 | 240 |

**Table 3**

| Zone | Neck | Head | Die 1 | Die 2 | Melt |
|---|---|---|---|---|---|
| T (°C) | 240 | 240 | 240 | 260 | 254 |

Compounds recipes and properties are summarized in the following table:

**Table 5**

| | | 4C | 5 |
|---|---|---|---|
| Elastomer (A1) | phr | 100 | 100 |
| Ionomer (I1) | phr | - | 11 |
| FOR1 | phr | 4 | 4 |
| FOR2 | phr | 1 | 1 |
| ECTFE (F1) | phr | 35 | 35 |
| FPA-1 | phr | 11 | - |
| Ca(OH)₂ | phr | 1.4 | 1.4 |

| Properties of injections molded specimens | | | |
|---|---|---|---|
| MI (260°C/2.16kg) | g/10' | 2 | 12 |
| Shore A | | 76 | 80 |
| Modulus | (psi) | 1144 | 1602 |
| Elongation at break | (%) | 163 | 73 |
| % swelling in DMAc | (%) | 179 | 46 |
| CS (150°C/70h) | % | 93.2 | 104.5 |

| | | | |
|---|---|---|---|
| 1 psi = 6894.8 Pa | | | |

As shown above, the incorporation of Ionomer (I1), *in lieu* of the PFPE wax PFA-1, while ensuring same processability advantages, has been demonstrated to provide excellent crosslinking behaviour, as evidenced by the dramatic reduction of swelling in DMAc, and increase in modulus.

## Claims

1. A thermoplastic vulcanizate fluorine-containing composition [vulcanizate (C)], comprising a continuous thermoplastic fluoropolymer phase and a dispersed vulcanized fluoroelastomer phase, said composition comprising:
- at least one thermoplastic fluoropolymer [polymer (F)];
- at least one (per)fluoroelastomer [elastomer (A)], and
- at least one ionomer polymer comprising recurring units derived from a fluorine-free hydrogenated olefin and recurring units derived from a (meth)acrylic acid having carboxylic acid group, at least a fraction of carboxylic acid groups being under the form of metal or ammonium salts [ionomer (I)].

2. The vulcanizate (C) of claim 1, wherein the polymer (F) is semi-crystalline polymer possessing a heat of fusion as determined by DSC according to ASTM D1638 of at least 5 J/g, preferably of at least 10 J/g, more preferably at least 30 J/g and possessing a heat of fusion of at most 55 J/g, preferably of at most 53 J/g, more preferably of at most 50 J/g.

3. The vulcanizate (C) of claim 1 or 2, wherein the polymer (F) comprises recurring units derived from at least one fluorinated monomer [monomer (F)] selected from the group consisting of:
(a) C₂-C₈ perfluoroolefins, such as tetrafluoroethylene, and hexafluoropropene;
(b) C₂-C₈ hydrogenated fluoroolefins, such as vinyl fluoride, 1,2-difluoroethylene, vinylidene fluoride and trifluoroethylene;
(c) perfluoroalkylethylenes complying with formula CH₂=CH-R_{f0}, in which R_{f0} is a C₁-C₆ perfluoroalkyl;
(d) chloro- and/or bromo- and/or iodo-C₂-C₆ fluoroolefins, like chlorotrifluoroethylene;
(e) (per)fluoroalkylvinylethers complying with formula CF₂=CFOR_{f1} in which R_{f1} is a C₁-C₆ fluoro- or perfluoroalkyl, e.g. CF₃, C₂F₅, C₃F₇;
(f) CF₂=CFOX₀ (per)fluoro-oxyalkylvinylethers, in which X₀ is a C₁-C₁₂ alkyl, or a C₁-C₁₂ oxyalkyl, or a C₁-C₁₂ (per)fluorooxyalkyl having one or more ether groups, like perfluoro-2-propoxy-propyl;
(g) (per)fluoroalkylvinylethers complying with formula CF₂=CFOCF₂OR_{f2} in which R_{f2} is a C₁-C₆ fluoro- or perfluoroalkyl, e.g. CF₃, C₂F₅, C₃F₇ or a C₁-C₆ (per)fluorooxyalkyl having one or more ether groups, like -C₂F₅-O-CF₃;
(h) functional (per)fluoro-oxyalkylvinylethers complying with formula CF₂=CFOY₀, in which Yo is a C₁-C₁₂ alkyl or (per)fluoroalkyl, or a C₁-C₁₂ oxyalkyl, or a C₁-C₁₂ (per)fluorooxyalkyl having one or more ether groups and Yo comprising a carboxylic or sulfonic acid group, in its acid, acid halide or salt form;
(i) fluorodioxoles, of formula (I): 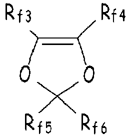
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

4. The vulcanizate (C) of anyone of the preceding claims, wherein polymer (F) comprises:
(j) from 40 to 60% by moles of recurring units derived from ethylene (E);
(jj) from 60 to 40% by moles of recurring units derived from at least one of chlorotrifluoroethylene (CTFE) and tetrafluoroethylene (TFE); and
(jjj) from 0 to 10% by moles, preferably from 0 to 5%, more preferably from 0 to 2.5 % by moles, of recurring units derived from of at least one fluorinated and/or fluorine-free comonomer(s) different from E, CTFE and TFE.

5. The vulcanizate (C) of claim 4, wherein polymer (F) is an ECTFE copolymer consisting essentially of recurring units derived from:
(j) from 46 to 52% by moles of ethylene (E);
(jj) from 54 to 48% by moles of chlorotrifluoroethylene (CTFE), based on the sum of (j) and (jj), and, optionally
(jjj) from 0.01 to 5 % by moles, based on the sum of (j), (jj) and (jjj), of at least one (per)fluoroalkylvinylethers complying with formula CF₂=CFOR_{f1} in which R_{f1} is a C₁-C₆ fluoro- or perfluoroalkyl, e.g. CF₃, C₂F₅, C₃F₇.

6. The vulcanizate (C) of anyone of the preceding claims, wherein said elastomer (A) comprises more than 10 % wt, preferably more than 30 % wt, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer), wherein said (per)fluorinated monomers is selected from the group consisting of:
- C₂-C₈ fluoro- and/or perfluoroolefins;
- C₂-C₈ hydrogenated monofluoroolefins;
- (per)fluoroalkylethylenes complying with formula CH₂=CH-R_{f0}, in which R_{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins;
- fluoroalkylvinylethers complying with formula CF₂=CFOR_{f1} in which R_{f1} is a C₁-C₆ fluoro- or perfluoroalkyl;
- hydrofluoroalkylvinylethers complying with formula CH₂=CFOR_{f1} in which R_{f1} is a C₁-C₆ fluoro- or perfluoroalkyl;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups;
- fluoroalkyl-methoxy-vinylethers complying with formula CF₂=CFOCF₂OR_{f2} in which R_{f2} is a C₁-C₆ fluoro- or perfluoroalkyl, or a C₁-C₆ (per)fluorooxyalkyl having one or more ether groups;
- functional fluoro-alkylvinylethers complying with formula CF₂=CFOY₀, in which Yo is a C₁-C₁₂ alkyl or (per)fluoroalkyl, or a C₁-C₁₂ oxyalkyl or a C₁-C₁₂ (per)fluorooxyalkyl, said Yo group comprising a carboxylic or sulfonic acid group, in its acid, acid halide or salt form;
- fluorodioxoles, of formula : 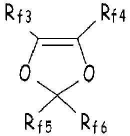
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom.

7. The vulcanizate (C) of anyone of the preceding claims, wherein said elastomer (A) is selected among:
(1)VDF-based copolymers, in which VDF is copolymerized with at least one comonomer selected from the group consisting of the followings classes, with the provision that such comonomer is different from VDF:
(a1) C₂-C₈ perfluoroolefins, such as tetrafluoroethylene (TFE), hexafluoropropylene (HFP), hexafluoroisobutylene;
(b1) hydrogen-containing C₂-C₈ olefins, such as C₂-C₈ non-fluorinated olefins (OI); C₂-C₈ partially fluorinated olefins, vinyl fluoride (VF), trifluoroethylene (TrFE), perfluoroalkyl ethylenes of formula CH₂ = CH-R_{f}, wherein R_{f} is a C₁-C₆ perfluoroalkyl group;
(c1) C₂-C₈ chloro and/or bromo and/or iodo-fluoroolefins such as chlorotrifluoroethylene (CTFE);
(d1) (per)fluoroalkylvinylethers of formula CF₂ = CFOR_{f}, wherein R_{f} is a C₁-C₆ (per)fluoroalkyl group; preferably perfluoroalkylvinylethers (PAVE) of above formula wherein R_{f} is C₁-C₆ perfluoroalkyl group, e.g. CF₃, C₂F₅, C₃F₇;
(e1) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
(f1) (per)fluorodioxoles having formula : 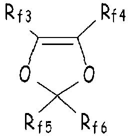 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
(g1) (per)fluoro-methoxy-vinylethers (MOVE, hereinafter) having formula:
CFX² = CX²OCF₂OR"_{f}
wherein R"_{f} is selected among C₁-C₆ (per)fluoroalkyls, linear or branched; C₅-C₆ cyclic (per)fluoroalkyls; and C₂-C₆ (per)fluorooxyalkyls, linear or branched, comprising from 1 to 3 catenary oxygen atoms, and X² = F, H; preferably X² is F and R"_{f} is -CF₂CF₃ (MOVE1); -CF₂CF₂OCF₃ (MOVE2); or -CF₃ (MOVE3);
(h1) C₂-C₈ non-fluorinated olefins (OI), for example ethylene and propylene; and
(2)TFE-based copolymers, in which TFE is copolymerized with at least one comonomer selected from the group consisting of the classes (a1), (c1), (d1), (e1), (g1), (h1), and class (i2) below, with the provision that such comonomer is different from TFE:
(i2) perfluorovinyl ethers containing cyanide groups.

8. The vulcanizate (C) according to anyone of the preceding claims, wherein the weight ratio between polymer (F) and elastomer (A) is comprised between 10/90 wt/wt to 50/50 wt/wt, preferably 20/80 to 40/60 wt/wt.

9. The vulcanizate (C) according to anyone of the preceding claims, wherein the ionomer (I) complies with formula: 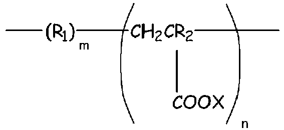 wherein:
- each of R₁ is independently a divalent alkyl group having from 2 to 4 carbon atoms (preferably R₁ is -CH₂CH₂-);
- each of R₂ is independently H or a C₁-C₃ alkyl group, preferably R₂ is H or -CH₃;
- m and n are integers, such as the ratio n/(m+n) is of 1 to 50 % moles,
- each of X is independently selected from the group consisting of H;
ammonium groups of formula NR^{N}₄ wherein each of R^{N}₄, equal to or different from each other, is H or a C₁-C₁₂ hydrocarbon group, preferably a C₁-C₆ alkyl group; and metals; said metals being advantageously selected from the group consisting of alkaline metals, alkaline earth metals, and Zn, with the provision that at least 10 % of the occurrences of X in above formula are selected from the group consisting of ammonium groups and metals, as above detailed.

10. The vulcanizate (C) of claim 9, wherein the ionomer (I) is an ethylene-acrylic acid copolymer comprising from 2.5 to 25 % moles of recurring units derived from acrylic acid, the remained being recurring units derived from ethylene, said copolymer being at least partially salified with a metal selected from the group consisting of Na, Mg, Ca, Zn.

11. The vulcanizate (C) according to anyone of the preceding claims, wherein the ionomer (I) is present in an amount of 0.5 to 20 % wt, preferably of 1 to 15 % wt, more preferably of 3 to 10 % wt, based on the weight of polymer (F).

12. A precursor mixture [mixture (M)] of a thermoplastic vulcanizate fluorine-containing composition, said mixture (M) comprising:
- at least one thermoplastic fluoropolymer [polymer (F)];
- at least one (per)fluoroelastomer [elastomer (A)],
- at least one ionomer polymer comprising recurring units derived from a fluorine-free hydrogenated olefin and recurring units derived from a (meth)acrylic acid having carboxylic acid group, at least a fraction of carboxylic acid groups being under the form of metal or ammonium salts [ionomer (I)]; and
- at least one curing system for the elastomer (A).

13. A method for manufacturing the vulcanizate (C) according to anyone of claims 1 to 11, comprising dynamic curing of the precursor mixture of claim 12.

## Patentansprüche

1. Fluorhaltige thermoplastische Vulkanisatzusammensetzung [Vulkanisat (C)], umfassend eine kontinuierliche thermoplastische Fluorpolymerphase und eine dispergierte vulkanisierte Fluorelastomerphase, wobei die Zusammensetzung Folgendes umfasst :
- mindestens ein thermoplastisches Fluorpolymer [Polymer (F)];
- mindestens ein (Per)fluorelastomer [Elastomer (A)] und
- mindestens ein Ionomer-Polymer, umfassend Wiederholungseinheiten, die sich von einem fluorfreien hydrierten Olefin ableiten, und Wiederholungseinheiten, die sich von einer (Meth)acrylsäure mit einer Carbonsäuregruppe ableiten, wobei mindestens ein Teil der Carbonsäuregruppen in Form von Metall- oder Ammoniumsalzen vorliegt [Ionomer (I)].

2. Vulkanisat (C) nach Anspruch 1, wobei es sich bei dem Polymer (F) um ein teilkristallines Polymer mit einer Schmelzwärme gemäß Bestimmung durch DSC nach ASTM D1638 von mindestens 5 J/g, vorzugsweise mindestens 10 J/g und weiter bevorzugt mindestens 30 J/g und einer Schmelzwärme von höchstens 55 J/g, vorzugsweise höchstens 53 J/g und weiter bevorzugt höchstens 50 J/g handelt.

3. Vulkanisat (C) nach Anspruch 1 oder 2, wobei das Polymer (F) Wiederholungseinheiten umfasst, die sich von mindestens einem fluorierten Monomer [Monomer (F)] ableiten, das aus der Gruppe bestehend aus :
(a) C₂-C₈-Perfluorolefinen, wie Tetrafluorethylen und Hexafluorpropen;
(b) hydrierten C₂-C₈-Fluorolefinen, wie Vinylfluorid, 1,2-Difluorethylen, Vinylidenfluorid und Trifluorethylen;
(c) Perfluoralkylethylenen der Formel CH₂=CH-R_{f0}, worin R_{f0} für ein C₁-C₆-Perfluoralkyl steht;
(d) C₂-C₆-Chlor- und/oder -Brom- und/oder -Iodfluorolefinen, wie Chlortrifluorethylen;
(e) (Per)fluoralkylvinylethern der Formel CF₂=CFOR_{f1}, worin R_{f1} für ein C₁-C₆-Fluor- oder -Perfluoralkyl, z.B. CF₃, C₂F₅, C₃F₇, steht;
(f) (Per)fluoroxyalkylvinylethern CF₂=CFOX₀, worin X₀ für ein C₁-C₁₂-Alkyl oder ein C₁-C₁₂-Oxyalkyl oder ein C₁-C₁₂-(Per)fluoroxyalkyl mit einer oder mehreren Ethergruppen, wie Perfluor-2-propoxypropyl, steht;
(g) (Per)fluoralkylvinylethern der Formel CF₂=CFOCF₂OR_{f2}, worin R_{f2} für ein C₁-C₆-Fluor- oder -Perfluoralkyl, z.B. CF₃, C₂F₅, C₃F₇, oder ein C₁-C₆-(Per)fluoroxyalkyl mit einer oder mehreren Ethergruppen, wie -C₂F₅-O-CF₃, steht;
(h) funktionellen (Per)fluoroxyalkylvinylethern der Formel CF₂=CFOY₀, worin Y₀ für ein C₁-C₁₂-Alkyl oder -(Per)fluoralkyl oder ein C₁-C₁₂-Oxyalkyl oder ein C₁-C₁₂-(Per)fluoroxyalkyl mit einer oder mehreren Ethergruppen steht und Y₀ eine Carbon- oder Sulfonsäuregruppe in ihrer Säure-, Säurehalogenid- oder Salzform umfasst;
(i) Fluordioxolen der Formel : 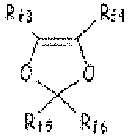 worin R_{f3}, R_{f4}, R_{f5} und R_{f6} jeweils gleich oder voneinander verschieden sind und unabhängig voneinander für ein Fluoratom, eine C₁-C₆-Fluor- oder -Per(halogen)fluoralkylgruppe, die gegebenenfalls ein oder mehr als ein Sauerstoffatom enthält, z.B. -CF₃, -C₂F₅, -C₃F₇, -OCF₃, -OCF₂CF₂OCF₃, stehen;
ausgewählt ist.

4. Vulkanisat (C) nach einem der vorhergehenden Ansprüche, wobei das Polymer (F) Folgendes umfasst :
(j) 40 bis 60 Mol- % Wiederholungseinheiten, die sich von Ethylen (E) ableiten;
(jj) 60 bis 40 mol- % Wiederholungseinheiten, die sich von Chlortrifluorethylen (CTFE) und/oder Tetrafluorethylen (TFE) ableiten; und
(jjj) 0 bis 10 Mol- %, vorzugsweise 0 bis 5 Mol- %, weiter bevorzugt 0 bis 2,5 Mol- %, Wiederholungseinheiten, die sich von mindestens einem fluorierten und/oder fluorfreien Comonomer, das von E, CTFE und TFE verschieden ist, ableiten.

5. Vulkanisat (C) nach Anspruch 4, wobei es sich bei dem Polymer (F) um ein ECTFE-Copolymer handelt, das im Wesentlichen aus Wiederholungseinheiten besteht, die sich von :
(j) 46 bis 52 Mol- % Ethylen (E);
(jj) 54 bis 48 Mol- % Chlortrifluorethylen (CTFE), bezogen auf die Summe von (j) und (jj), und gegebenenfalls
(jjj) 0,01 bis 5 Mol- %, bezogen auf die Summe von (j), (jj) und (jjj), mindestens eines (Per)fluoralkylvinylethers der Formel CF₂=CFOR_{f1}, worin R_{f1} für ein C₁-C₆-Fluor- oder -Perfluoralkyl, z.B. CF₃, C₂F₅, C₃F₇, steht.

6. Vulkanisat (C) nach einem der vorhergehenden Ansprüche, wobei das Elastomer (A) mehr als 10 Gew.- %, vorzugsweise mehr als 30 Gew.- %, Wiederholungseinheiten, die sich von mindestens einem ethylenisch ungesättigten Monomer mit mindestens einem Fluoratom (im Folgenden (per)fluoriertes Monomer) ableiten, und gegebenenfalls Wiederholungseinheiten, die sich von mindestens einem ethylenisch ungesättigten Monomer ohne Fluoratome (im Folgenden hydriertes Monomer) ableiten, umfasst, wobei die (per)fluorierten Monomere aus der Gruppe bestehend aus :
- C₂-C₆-Fluor- und/oder -Perfluorolefinen;
- hydrierten C₂-C₈-Monofluorolefinen;
- (Per)fluoralkylethylenen der Formel CH₂=CH-R_{f0}, worin R_{f0} für ein C₁-C₆-(Per)fluoralkyl oder ein C₁-C₆-(Per)fluoroxyalkyl mit einer oder mehreren Ethergruppen steht;
- C₂-C₆-Chlor- und/oder -Brom- und/oder -Iodfluorolefinen;
- Fluoralkylvinylethern der Formel CF₂=CFOR_{f1}, worin R_{f1} für ein C₁-C₆-Fluor- oder -Perfluoralkyl steht;
- Hydrofluoralkylvinylethern der Formel CH₂=CFOR_{f1}, worin R_{f1} für ein C₁-C₆-Fluor- oder -Perfluoralkyl steht;
- Fluoroxyalkylvinylethern der Formel CF₂=CFOX₀, worin X₀ für ein C₁-C₁₂-Oxyalkyl oder ein C₁-C₁₂-(Per)fluoroxyalkyl mit einer oder mehreren Ethergruppen steht;
- Fluoralkylmethoxyvinylethern der Formel CF₂=CFOCF₂OR_{f2}, worin R_{f2} für ein C₁-C₆-Fluor- oder -Perfluoralkyl oder ein C₁-C₆-(Per)fluoroxyalkyl mit einer oder mehreren Ethergruppen steht;
- funktionellen Fluoralkylvinylethern der Formel CF₂=CFOY₀, worin Y₀ für ein C₁-C₁₂-Alkyl oder -(Per)fluoralkyl oder ein C₁-C₁₂-Oxyalkyl oder ein C₁-C₁₂-(Per)fluoroxyalkyl steht, wobei die Gruppe Y₀ eine Carbon- oder Sulfonsäuregruppe in ihrer Säure-, Säurehalogenid- oder Salzform umfasst;
- Fluordioxolen der Formel : 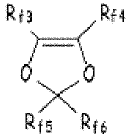 worin R_{f3}, R_{f4}, R_{f5} und R_{f6} jeweils gleich oder voneinander verschieden sind und unabhängig voneinander für ein Fluoratom, eine C₁-C₆-Fluor- oder -Per(halogen)fluoralkylgruppe, die gegebenenfalls ein oder mehr als ein Sauerstoffatom enthält, stehen;
ausgewählt sind.

7. Vulkanisat (C) nach einem der vorhergehenden Ansprüche, wobei das Elastomer (A) aus :
(1) auf VDF basierenden Copolymeren, in denen VDF mit mindestens einem Comonomer aus den folgenden Klassen copolymerisiert ist, mit der Maßgabe, dass ein derartiges Comonomer von VDF verschieden ist :
(a1) C₂-C₈-Perfluorolefinen, wie Tetrafluorethylen (TFE), Hexafluorpropylen (HFP), Hexafluorisobutylen;
(b1) wasserstofflialtigen C₂-C₈-Olefinen, wie nichtfluorierten C₂-C₈-Olefinen (O1); teil-fluorierten C₂-C₈-Olefinen, Vinylfluorid (VF), Trifluorethylen (TrFE), Perfluoralkylethylenen der Formel CH₂=CH-R_{f}, worin R_{f} für eine C₁-C₆-Perfluoralkylgruppe steht;
(c1) C₂-C₈-Chlor- und/oder -Brom- und/oder -Iodfluorolefinen wie Chlortrifluorethylen (CTFE);
(d1) (Per)fluoralkylvinylethern der Formel CF₂=CFOR_{f}, worin R_{f} für eine C₁-C₆-(Per)fluoralkylgruppe steht; vorzugsweise Perfluoralkylvinylethern (PAVE) der obigen Formel, worin R_{f} für eine C₁-C₆-(Per)fluoralkylgruppe, z.B. CF₃, C₂F₅, C₃F₇, steht;
(e1) (Per)fluoroxyalkylvinylethern der Formel CF₂=CFOX, worin X für ein C₁-C₁₂-((Per)fluor)oxyalkyl mit kettenständigen Sauerstoffatomen, z.B. die Perfluor-2-propoxypropylgruppe, steht;
(f1) (Per)fluordioxolen der Formel: 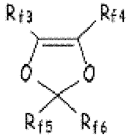 worin R_{f3}, R_{f4}, R_{f5} und R_{f6} gleich oder voneinander verschieden sind und unabhängig voneinander aus Fluoratomen und C₁-C₆-(Per)fluoralkylgruppen, die gegebenenfalls ein oder mehr als ein Sauerstoffatom enthalten, wie insbesondere -CF₃, -C₂F₅, -C₃F₇, -OCF₃, -OCF₂CF₂OCF₃, ausgewählt sind, vorzugsweise Perfluordioxolen;
(g1) (Per) fluormethoxyvinylethern (im Folgenden MOVE) der Formel:
CFX²=CX²OCF₂OR"_{f}
worin R"_{f} aus linearen oder verzweigten C₁-C₆-(Per)fluoralkylgruppen; cyclischen C₅-C₆-(Per)fluoralkylgruppen und linearen oder verzweigten C₂-C₆-(Per)fluoroxyalkylgruppen mit 1 bis 3 kettenständigen Sauerstoffatomen ausgewählt ist und X² = F, H; vorzugsweise X² für F steht und R"_{f} für -CF₂CF₃ (MOVE1); -CF₂CF₂OCF₃ (MOVE2) oder -CF₃ (MOVE3) steht;
(hl)nichtfluorierten C₂-C₈-Olefinen (O1), beispielsweise Ethylen und Propylen; und
(2) auf TFE basierenden Copolymeren, in denen TFE mit mindestens einem Comonomer aus den Klassen (a1), (c1), (d1), (e1), (g1), (h1) und Klasse (i2) unten copolymerisiert ist, mit der Maßgabe, dass ein derartiges Comonomer von TFE verschieden ist :
(i2) Perfluorvinylethern mit Cyanidgruppen;
ausgewählt ist.

8. Vulkanisat (C) nach einem der vorhergehenden Ansprüche, wobei das Gewichtsverhältnis zwischen Polymer (F) und Elastomer (A) 10/90 Gew./Gew. bis 50/50 Gew./Gew., vorzugsweise 20/80 bis 40/60 Gew./Gew. beträgt.

9. Vulkanisat (C) nach einem der vorhergehenden Ansprüche, wobei das Ionomer (I) der Formel: 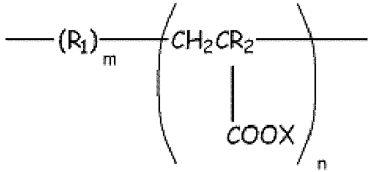 entspricht, worin :
- R₁ jeweils unabhängig für eine zweiwertige Alkylgruppe mit 2 bis 4 Kohlenstoffatomen steht (vorzugsweise R₁ für -CH₂CH₂- steht);
- R₂ jeweils unabhängig für H oder eine C₁-C₃-Alkylgruppe steht, vorzugsweise R₂ für H oder -CH₃ steht;
- m und n für solche ganze Zahlen stehen, dass das Verhältnis n/(m+n) 1 bis 50 Mol- % beträgt;
- X jeweils unabhängig aus der Gruppe bestehend aus H; Ammoniumgruppen der Formel NR^{N}₄, worin R^{N}₄ jeweils gleich oder voneinander verschieden für H oder eine C₁-C₁₂-Kohlenwasserstoffgruppe, vorzugsweise eine C₁-C₆-Alkylgruppe, steht; und Metallen ausgewählt ist; wobei die Metalle vorteilhafterweise aus der Gruppe bestehend aus Alkalimetallen, Erdalkalimetallen und Zn ausgewählt sind, mit der Maßgabe, dass mindestens 10 % der Vorkommen von X in obiger Formel aus der Gruppe bestehend aus Ammoniumgruppen und Metallen gemäß obigen Ausführungen ausgewählt sind.

10. Vulkanisat (C) nach Anspruch 9, wobei es sich bei dem Ionomer (I) um ein Ethylen-Acrylsäure-Copolymer mit 2,5 bis 25 Mol- % Wiederholungseinheiten, die sich von Acrylsäure ableiten, wobei es sich bei dem Rest um Wiederholungseinheiten, die sich von Ethylen ableiten, handelt, handelt, wobei das Copolymer zumindest teilweise mit einem Metall aus der Gruppe bestehend aus Na, Mg, Ca und Zn versalzt ist.

11. Vulkanisat (C) nach einem der vorhergehenden Ansprüche, wobei das Ionomer (I) in einer Menge von 0,5 bis 20 Gew.- %, vorzugsweise 1 bis 15 Gew.- % und weiter bevorzugt 3 bis 10 Gew.- %, bezogen auf das Gewicht von Polymer (F), vorliegt.

12. Vorläufermischung [Mischung (M)] für eine fluorhaltige thermoplastische Vulkanisatzusammensetzung, wobei die Mischung (M) Folgendes umfasst :
- mindestens ein thermoplastisches Fluorpolymer [Polymer (F)];
- mindestens ein (Per)fluorelastomer [Elastomer (A)];
- mindestens ein Ionomer-Polymer, umfassend Wiederholungseinheiten, die sich von einem fluorfreien hydrierten Olefin ableiten, und Wiederholungseinheiten, die sich von einer (Meth)acrylsäure mit einer Carbonsäuregruppe ableiten, wobei mindestens ein Teil der Carbonsäuregruppen in Form von Metall- oder Ammoniumsalzen vorliegt [Ionomer (I)]; und
- mindestens ein Härtungssystem für das Elastomer (A).

13. Verfahren zur Herstellung des Vulkanisat (C) nach einem der Ansprüche 1 bis 11, umfassend das dynamische Härten der Vorläufermischung nach Anspruch 12.

## Revendications

1. Composition de vulcanisat thermoplastique contenant du fluor [vulcanisat (C)], comprenant une phase fluoropolymère thermoplastique continue et une phase fluoroélastomère vulcanisée dispersée, ladite composition comprenant :
- au moins un fluoropolymère thermoplastique [polymère (F)] ;
- au moins un (per)fluoroélastomère [élastomère (A)], et
- au moins un polymère ionomère comprenant des unités structurales dérivées d'une oléfine hydrogénée exempte de fluor et des unités structurales dérivées d'un acide (méth)acrylique comportant un groupe acide carboxylique, au moins une fraction des groupes acide carboxylique étant sous la forme de sels de métal ou d'ammonium [ionomère (I)].

2. Vulcanisat (C) selon la revendication 1, dans lequel le polymère (F) est un polymère semi-cristallin ayant une chaleur de fusion, telle que déterminée par calorimétrie différentielle à balayage selon ASTM D1638, d'au moins 5 J/g, préférablement d'au moins 10 J/g, plus préférablement d'au moins 30 J/g, et ayant une chaleur de fusion d'au maximum 55 J/g, préférablement d'au maximum 53 J/g, plus préférablement d'au maximum 50 J/g.

3. Vulcanisat (C) selon la revendication 1 ou 2, dans lequel le polymère (F) comprend des unités structurales dérivées d'au moins un monomère fluoré [monomère (F)] sélectionné dans le groupe constitué de :
(a) perfluorooléfines C₂-C₈, telles que le tétrafluoroéthylène, et l'hexafluoropropène ;
(b) fluorooléfines hydrogénées C₂-C₈, telles que le fluorure de vinyle, le 1,2-difluoroéthylène, le fluorure de vinylidène et le trifluoroéthylène ;
(c) perfluoroalkyléthylènes selon la formule CH₂=CH-R_{f0}, dans laquelle R_{f0} est un groupe perfluoroalkyle C₁-C₆ ;
(d) chloro- et/ou bromo- et/ou iodo-fluorooléfines C₂-C₆, telles que le chlorotrifluoroéthylène ;
(e) (per)fluoroalkylvinyléthers selon la formule CF₂=CFOR_{f1}, dans laquelle R_{f1} est un groupe fluoro- ou perfluoroalkyle C₁-C₆, par exemple CF₃, C₂F₅, C₃F₇ ;
(f) (per)fluoro-oxyalkylvinyléthers selon la formule CF₂=CFOX₀, dans laquelle X₀ est un groupe alkyle C₁-C₁₂, ou un groupe oxyalkyle C₁-C₁₂, ou un groupe (per)fluorooxyalkyle C₁-C₁₂ comportant un ou plusieurs groupes éther, tels que le perfluoro-2-propoxy-propyle ;
(g) (per)fluoroalkylvinyléthers selon la formule CF₂=CFOCF₂OR₁₂ dans laquelle R_{f2} est un groupe fluoro- ou perfluoroalkyle C₁-C₆, par exemple CF₃, C₂F₅, C₃F₇ ou un groupe (per)fluorooxyalkyle C₁-C₆ comportant un ou plusieurs groupes éther, tel que -C₂F₅-O-CF₃ ;
(h) (per)fluoro-oxyalkylvinyléthers fonctionnels selon la formule CF₂=CFOY₀, dans laquelle Y₀ est un groupe alkyle ou (per)fluoroalkyle C₁-C₁₂, ou un groupe oxyalkyle C₁-C₁₂, ou un groupe (per)fluorooxyalkyle C₁-C₁₂ comportant un ou plusieurs groupes éther et Y₀ comprenant un groupe acide carboxylique ou sulfonique, sous sa forme acide, halogénure d'acide ou sel,
(i) fluorodioxoles, selon la formule (I) : 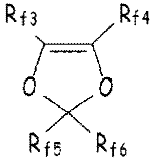
dans laquelle chacun de R_{f3}, R_{f4}, R_{f5}, R_{f6}, identiques ou différents les uns des autres, est indépendamment un atome de fluor, un groupe fluoro- ou per(halo)fluoroalkyle C₁-C₆, comprenant optionnellement un ou plusieurs atomes d'oxygène, par exemple -CF₃, -C₂F₅, -C₃F₇, -OCF₃, -OCF₂CF₂OCF₃.

4. Vulcanisat (C) selon l'une quelconque des revendications précédentes, dans lequel le polymère (F) comprend :
(j) de 40 à 60 % en moles d'unités structurales dérivées d'éthylène (E) ;
(jj) de 60 à 40 % en moles d'unités structurales dérivées d'au moins l'un du chlorotrifluoroéthylène (CTFE) et du tétrafluoroéthylène (TFE) ; et
(jjj) de 0 à 10 % en moles, préférablement de 0 à 5 %, plus préférablement de 0 à 2,5 % en moles, d'unités structurales dérivées d'au moins un ou plusieurs comonomères fluorés et/ou exempts de fluor différents de E, CTFE et TFE.

5. Vulcanisat (C) selon la revendication 4, dans lequel le polymère (F) est un copolymère d'ECTFE consistant essentiellement en unités structurales dérivées :
(j) de 46 à 52 % en moles d'éthylène (E) ;
(jj) de 54 à 48 % en moles de chlorotrifluoroéthylène (CTFE), relativement à la somme de (j) et (jj), et, optionnellement ;
(jjj) de 0,01 à 5 % en moles, relativement à la somme de (j), (jj) et (jjj), d'au moins un ou plusieurs (per)fluoroalkylvinyléthers selon la formule CF₂=CFOR_{f1}, dans laquelle R_{f1} est un groupe fluoro- ou perfluoroalkyle C₁-C₆, par exemple CF₃, C₂F₅, C₃F₇.

6. Vulcanisat (C) selon l'une quelconque des revendications précédentes, dans lequel ledit élastomère (A) comprend plus de 10 % en poids, préférablement plus de 30 % en poids, d'unités structurales dérivées d'au moins un monomère à insaturation éthylénique comprenant au moins un atome de fluor (désigné ci-après par le terme « monomère (per)fluoré ») et, optionnellement, des unités structurales dérivées d'au moins un monomère à insaturation éthylénique exempt d'atome de fluor (désigné ci-après par le terme « monomère hydrogéné »), dans lequel lesdits monomères (per)fluorés sont sélectionnés dans le groupe constitué de :
- fluoro- et/ou perfluorooléfines C₂-C₈ ;
- monofluorooléfines hydrogénées C₂-C₈ ;
- (per)fluoroalkyléthylènes selon la formule CH₂=CH-R_{f0}, dans laquelle R_{f0} est un groupe (per)fluoroalkyle C₁-C₆ ou un groupe (per)fluorooxyalkyle C₁-C₆ comportant un ou plusieurs groupes éther ;
- chloro- et/ou bromo- et/ou iodo-fluorooléfines C₂-C₆ ;
- fluoroalkylvinyléthers selon la formule CF₂=CFOR_{f1}, dans laquelle R_{f1} est un groupe fluoro- ou perfluoroalkyle C₁-C₆ ;
- hydrofluoroalkylvinyléthers selon la formule CH₂=CFOR_{f1}, dans laquelle R_{f1} est un groupe fluoro- ou perfluoroalkyle C₁-C₆ ;
- fluoro-oxyalkylvinyléthers selon la formule CF₂=CFOX₀, dans laquelle X₀ est un groupe oxyalkyle C₁-C₁₂, ou un groupe (per)fluorooxyalkyle C₁-C₁₂ comportant un ou plusieurs groupes éther ;
- fluoroalkyl-méthoxy-vinyléthers selon la formule CF₂=CFOCF₂OR_{f2} dans laquelle R_{f2} est un groupe fluoro- ou perfluoroalkyle C₁-C₆ ou un groupe (per)fluorooxyalkyle C₁-C₆ comportant un ou plusieurs groupes éther;
- fluoro-alkylvinyléthers fonctionnels selon la formule CF₂=CFOY₀, dans laquelle Y₀ est un groupe alkyle ou (per)fluoroalkyle C₁-C₁₂, ou un groupe oxyalkyle C₁-C₁₂, ou un groupe (per)fluorooxyalkyle C₁-C₁₂, ledit groupe Y₀ comprenant un groupe acide carboxylique ou sulfonique, sous sa forme acide, halogénure d'acide ou sel,
- fluorodioxoles, ayant la formule : 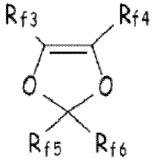
dans laquelle chacun de R_{f3}, R_{f4}, R_{f5}, R_{f6}, identiques ou différents les uns des autres, est indépendamment un atome de fluor, un groupe fluoro- ou per(halo)fluoroalkyle C₁-C₆, comprenant optionnellement un ou plusieurs atomes d'oxygène.

7. Vulcanisat (C) selon l'une quelconque des revendications précédentes, dans lequel ledit élastomère (A) est sélectionné parmi :
(1) des copolymères à base de VDF, dans lesquels le VDF est copolymérisé avec au moins un comonomère sélectionné dans le groupe constitué des classes suivantes, sous réserve que ce comonomère soit différent du VDF :
(a1)perfluorooléfines C₂-C₈, telles que le tétrafluoroéthylène (TFE), l'hexafluoropropylène (HFP), l'hexafluoroisobutylène ;
(b1)oléfines C₂-C₈ contenant de l'hydrogène, telles que des oléfines non fluorées C₂-C₈ (O1) ; des oléfines partiellement fluorées C₂-C₈, le fluorure de vinyle (VF), le trifluoroéthylène (TrFE), des perfluoroalkyléthylènes selon la formule CH₂=CH-R_{f}, dans laquelle R_{f} est un groupe perfluoroalkyle C₁-C₆ ;
(c1)chloro et/ou bromo et/ou iodo-fluorooléfines C₂-C₈ telles que le chlorotrifluoroéthylène (CTFE) ;
(d1)(per)fluoroalkylvinyléthers selon la formule CF₂=CFOR_{f}, dans laquelle R_{f} est un groupe (per)fluoroalkyle C₁-C₆ ; préférablement des perfluoroalkylvinyléthers (PAVE) selon la formule ci-dessus dans laquelle R_{f} est un groupe perfluoroalkyle C₁-C₆, par exemple CF₃, C₂F₅, C₃F₇;
(e1)(per)fluoro-oxy-alkylvinyléthers selon la formule CF₂=CFOX, dans laquelle X est un groupe ((per)fluoro)-oxyalkyle C₁-C₁₂ comprenant des atomes d'oxygène caténaire, par exemple le groupe perfluoro-2-propoxypropyle ;
(f1)(per)fluorodioxoles ayant la formule : 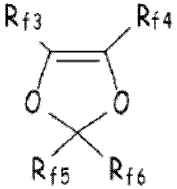 dans laquelle R_{f3}, R_{f4}, R_{f5}, R_{f6}, identiques ou différents les uns des autres, sont sélectionnés indépendamment parmi des atomes de fluor et des groupes (per)fluoroalkyle C₁-C₆, comprenant optionnellement un ou plus d'un atome d'oxygène, tels que notamment -CF₃, -C₂F₅, -C₃F₇, -OCF₃, -OCF₂CF₂OCF₃ ; préférablement des perfluorodioxoles ;
(g1)(per)fluoro-méthoxy-vinyléthers (désignés ci-après par le terme « MOVE ») ayant la formule :
CFX²=CX²OCF₂OR"_{f}
dans laquelle R"_{f} est sélectionné parmi des groupes (per)fluoroalkyle C₁-C₆, linéaires ou ramifiés ; des groupes (per)fluoroalkyle cycliques C₅-C₆ ; et des groupes (per)fluorooxyalkyle C₂-C₆, linéaires ou ramifiés, comprenant de 1 à 3 atomes d'oxygène caténaire, et X² = F, H ; X² étant préférablement F et R"_{f} étant un groupe -CF₂CF₃ (MOVE1) ; -CF₂CF₂OCF₃ (MOVE2) ; ou -CF₃ (MOVE3) ;
(h1)oléfines non fluorées C₂-C₈ (O1), par exemple l'éthylène et le propylène ; et
(2) des copolymères à base de TFE, dans lesquels le TFE est copolymérisé avec au moins un comonomère sélectionné dans le groupe constitué des classes (a1), (c1), (d1), (e1), (g1), (h1), et de la classe (i2) ci-dessous, sous réserve que ce comonomère soit différent du TFE ;
(i2) perfluorovinyléthers contenant des groupes cyanure.

8. Vulcanisat (C) selon l'une quelconque des revendications précédentes, dans lequel le rapport pondéral entre le polymère (F) et l'élastomère (A) est de 10/90 p/p à 50/50 p/p, préférablement de 20/80 à 40/60 p/p.

9. Vulcanisat (C) selon l'une quelconque des revendications précédentes, dans lequel l'ionomère (I) est selon la formule : 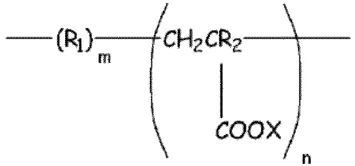 dans laquelle :
- chaque groupe R₁ est indépendamment un groupe alkyle divalent comportant de 2 à 4 atomes de carbone (R₁ étant préférablement un groupe -CH₂CH₂-) ;
- chaque groupe R₂ est indépendamment un atome d'hydrogène ou un groupe alkyle C₁-C₃, R₂ étant préférablement un atome d'hydrogène ou un groupe -CH₃ ;
- m et n sont des nombres entiers, tels que le rapport n/(m + n) soit de 1 à 50 % en moles,
- chaque groupe X est sélectionné indépendamment dans le groupe constitué d'un atome d'hydrogène ; de groupes ammonium ayant la formule NR^{N}₄, dans laquelle chacun des groupes R^{N}₄, identiques ou différents les uns des autres, est un atome d'hydrogène ou un groupe hydrocarboné C₁-C₁₂, préférablement un groupe alkyle C₁-C₆ ; et de métaux ; lesdits métaux étant avantageusement sélectionnés dans le groupe constitué de métaux alcalins, de métaux alcalinoterreux, et de Zn, sous réserve qu'au moins 10 % des occurrences de X dans la formule ci-dessus soient sélectionnées dans le groupe constitué de groupes ammonium et de métaux, tels qu'énoncés en détail ci-dessus.

10. Vulcanisat (C) selon la revendication 9, dans lequel l'ionomère (I) est un copolymère d'éthylène-acide acrylique comprenant de 2,5 à 25 % en moles d'unités structurales dérivées d'acide acrylique, le reste étant des unités structurales dérivées d'éthylène, ledit copolymère étant au moins partiellement salifié avec un métal sélectionné dans le groupe constitué de Na, Mg, Ca, Zn.

11. Vulcanisat (C) selon l'une quelconque des revendications précédentes, dans lequel l'ionomère (I) est présent dans une quantité de 0,5 à 20 % en poids, préférablement de 1 à 15 % en poids, plus préférablement de 3 à 10 % en poids, relativement au poids du polymère (F).

12. Mélange précurseur [mélange (M)] d'une composition de vulcanisat thermoplastique contenant du fluor, ledit mélange (M) comprenant :
- au moins un fluoropolymère thermoplastique [polymère (F)] ;
- au moins un (per)fluoroélastomère [élastomère (A)],
- au moins un polymère ionomère comprenant des unités structurales dérivées d'une oléfine hydrogénée exempte de fluor et des unités structurales dérivées d'un acide (méth)acrylique comportant un groupe acide carboxylique, au moins une fraction des groupes acide carboxylique étant sous la forme de sels de métal ou d'ammonium [ionomère (I)] ; et
- au moins un système de durcissement pour l'élastomère (A).

13. Procédé de fabrication du vulcanisat (C) selon l'une quelconque des revendications 1 à 11, comprenant un durcissement dynamique du mélange précurseur selon la revendication 12.
